# EUROPEAN PATENT SPECIFICATION

(11) **EP 0 888 943 B1**
(45) Date of publication and mention of the grant of the patent: **10.10.2001**
(21) Application number: 97108106.2
(22) Date of filing: 20.05.1997
(51) Int. Cl.: B60T 13/66, B60T 13/68

(54) **Railway brake valve assembly**
Bremsventilanordnung für Schienenfahrzeuge
Ensemble de valve de freinage pour véhicule ferroviaire

(43) Date of publication of application: 07.01.1999
(73) Proprietor: WESTINGHOUSE AIR BRAKE COMPANY, Wilmerding, PA 15148 (US)
(72) Inventor: Kurtz, Ronald C., Greer, South Carolina 29651 (US); Griffin, Scott N., Spartanburg, South Carolina 29301 (US); Brillant, Daniel, Greer, South Carolina 29650 (US)
(74) Representative: Petri, Stellan

(56) References cited:
- EP-A- 0 540 852
- EP-A- 0 845 397
- US-A- 5 454 399

## Description

### Background of the Invention

The present invention relates generally to fluid-actuated braking systems, such as the type frequently installed on railway vehicles. More particularly, the invention relates to an improved valve assembly which may be used in such a braking system.

Although its basic concepts were developed many years ago, the air brake system remains in widespread use, particularly in the railway industry. As implied by the name, air brake systems utilize pressurized air to actuate the respective brakes of a vehicle, for example, a railway vehicle. This air is typically supplied by a reservoir located on-board the vehicle, which is "charged" to a desired fluid pressure.

Flow of air between the reservoir and the brake is controlled by a relatively large fluid valve. The valve itself is generally constructed having two or more internal valves to permit multiple states of fluid transfer. Typically, these internal valves are individually controlled by electric solenoids.

US-A-5 454 399, for example, discloses a valve assembly that features a main valve portion and an electropneumatic pilot valve portion. Application and release solenoid valves in the pilot valve portion are operated in such a way as to control the main valve portion for the purpose of supplying pressurized air to, maintaining it within and releasing it from the brake cylinder(s) of a railway vehicle.

EP-A-0 845 397, only relevant under Article 54(3) EPC, merely discloses a pressure control device that employs two electro-magnets that are operated, under the control of an electronic control unit using feedback from a pressure sensor, to control the movement of two valve pistons for the purpose of pressurising and venting a brake cylinder.

Due to operating voltage limitations, the brake solenoids often produce a relatively small operating force. This is in contrast with the relatively large force often imposed on the internal valve mechanism due to fluid pressure. In fact, the fluid force may often exceed the solenoid force by greater than ten (10) times.

In the past, the disparity between the fluid force and the solenoid force has often been addressed utilizing a pilot valve design. Instead of acting directly on the valve, the solenoid in this design functions to control a smaller valve that regulates the pilot supply. Air from the pilot supply in turn actuates a piston connected to the larger valve mechanism. Movement of the piston thus causes the larger valve mechanism to move into and out of engagement with its associated valve seat.

While the pilot valve design is effective to overcome the disparity between the fluid force and the solenoid force, it has several disadvantages. In particular, this construction requires an additional air supply, i.e., the pilot supply, that is otherwise unnecessary for brake operation. Various parts are also required in the valve itself to regulate operation of the additional air supply.

Furthermore, the valve mechanism does not move immediately upon actuation of the solenoid. Instead, the larger valve is actuated only when the pilot supply imposes a sufficient force on the piston. This sequential operation limits the response time of the larger valve.

Various attempts have been made to provide suitable direct-acting valves by reducing the fluid imbalance in the valve, thus cancelling the effects of the fluid force. In some such designs, seals are utilized to balance the fluid pressure in the valve. These seals, however, have often caused a relatively large amount of friction that the solenoid, as well as any return spring, must overcome as the valve mechanism is moved.

Other direct-acting valves have utilized diaphragms in an attempt to balance the fluid forces. Due to the configuration of the diaphragms, however, these valves may still exhibit undesirable force imbalance in certain situations.

### Summary of the Invention

The present invention recognizes and addresses the foregoing disadvantages, and others, of prior art constructions and methods. Accordingly, it is an object of the present invention to provide an improved fluid valve.

It is a specific object of the present invention to provide an improved brake valve assembly particularly useful in railway applications.

It is another object of the present invention to provide an improved brake valve assembly that eliminates the need for a pilot supply.

It is another object of the present invention to provide an improved brake valve assembly that achieves relatively quick response time.

It is another object of the present invention to provide an improved brake valve assembly that substantially achieves balance throughout its operation.

Some of these objects are achieved by an improved brake valve assembly suitable in many embodiments for use on a railway vehicle as set forth in the claims. The valve assembly includes a valve housing defining a supply port, a delivery port, an exhaust port and an interconnecting conduit. The interconnecting conduit provides fluid communication between first and second valve devices within the valve housing. The valve devices are controllable by respective electric solenoids to effect multiple states of fluid communication between the supply port, the delivery port and the exhaust port.

The multiple states of fluid communication preferably include a fluid delivery state wherein a first fluid flow path is defined between the supply port and the delivery port. A fluid exhaust state is also preferably provided wherein a second fluid flow path is defined between the delivery port and the exhaust port. A lap state may be provided to block fluid communication between the supply port, the delivery port and the exhaust port.

Each of the internal valve devices includes a valve element that directly moves into and out of engagement with an associated valve seat upon actuation of the respective solenoid. To balance internal fluid forces, each of the valve devices further includes at least one counterbalance assembly. In an exemplary embodiment, the first valve device may be equipped with a single counterbalance assembly, with the second valve device having a pair of oppositely-directed counterbalance assemblies.

Each of the counterbalance assemblies is operatively connected in fluid opposition to the valve element when engaging the valve seat. Thus, the counterbalance assembly will provide a fluid force opposite to that imposed on the engaged valve element. Advantageously, the effective area of a respective counterbalance assembly will also preferably remain substantially equal to that of the associated valve seat throughout the predetermined axial range through which the valve element moves.

In exemplary embodiments, each counterbalance assembly comprises a flexible, rolling diaphragm disposed adjacent to a diaphragm follower. The diaphragm follower may be constructed having a cylindrical cup portion integrally extending into a flanged rim portion distal from the valve seat.

In multiple-state embodiments, the first valve device may include a pair of valve seats respectively associated with the supply port and the exhaust port. A single valve element may be provided in such embodiments to reciprocatively move between the pair of valve seats. The second valve device may include a single valve seat, associated with the delivery port.

Other objects of the invention are achieved by a valve assembly for selectively regulating flow of a fluid medium. The valve assembly includes a valve housing defining a first fluid port, a second fluid port and a first fluid flow path therebetween. A solenoid device, including an axially moveable armature element, is also provided for connection to a source of electrical energy. A valve stem is operatively connected to the armature element of the solenoid device for direct axial movement therewith.

The valve assembly further includes a first valve seat located along the first fluid flow path. A valve element is mounted on the valve stem for movement into and out of engagement with the first valve seat. At least one counterbalance assembly, having an effective area substantially equivalent to a predetermined effective area of the first valve seat, is also provided. The counterbalance assembly is configured such that its effective area is substantially constant throughout the axial range over which the valve seat operatively moves.

In some exemplary embodiments, the valve assembly further comprise a spring operatively connected to the valve stem. The spring functions to urge the valve stem in an axial direction opposite to that produced by actuation of the solenoid. An annular guide element may also be mounted to the valve stem to prevent transverse instability during use.

The valve housing may also be configured further defining a third fluid port. In such embodiments, a second valve seat may be located along a second fluid flow path between the third fluid port and the second fluid port. The second valve seat is preferably situated in axial opposition to the first valve seat such that the valve element moves reciprocatively therebetween.

Other objects, features and aspects of the present invention are provided by various combinations and subcombinations of the disclosed elements, which are discussed in greater detail below.

### Brief Description of the Drawings

A full and enabling disclosure of the present invention, including the best mode thereof, to one of ordinary skill in the art, is set forth more particularly in the remainder of the specification, including reference to the accompanying drawings, in which:
Figure 1 is a diagrammatic representation illustrating the basic components of a fluid-actuated braking system such as may be installed on a railway vehicle;
Figure 2 is a partial cross-sectional view of an improved brake valve assembly constructed in accordance with the present invention;
Figure 3 is an exploded view of the valve stem and associated components shown in the left valve of Figure 2;
Figure 4 is an enlarged partial cross-sectional view of the area so indicated in Figure 2; and
Figure 5 is an enlarged partial cross-sectional view of the area so indicated in Figure 2.

Repeat use of reference characters in the present specification and drawings is intended to represent same or analogous features or elements of the invention.

### Detailed Description of Preferred Embodiments

It is to be understood by one of ordinary skill in the art that the discussion herein is a description of exemplary embodiments only, and is not intended as limiting the broader aspects of the present invention, which broader aspects are embodied in the exemplary constructions. For instance, for clarity and ease of explanation, the invention will be described as it relates to a railway vehicle. It will be appreciated, however, that the invention is not limited to only railway system applications.

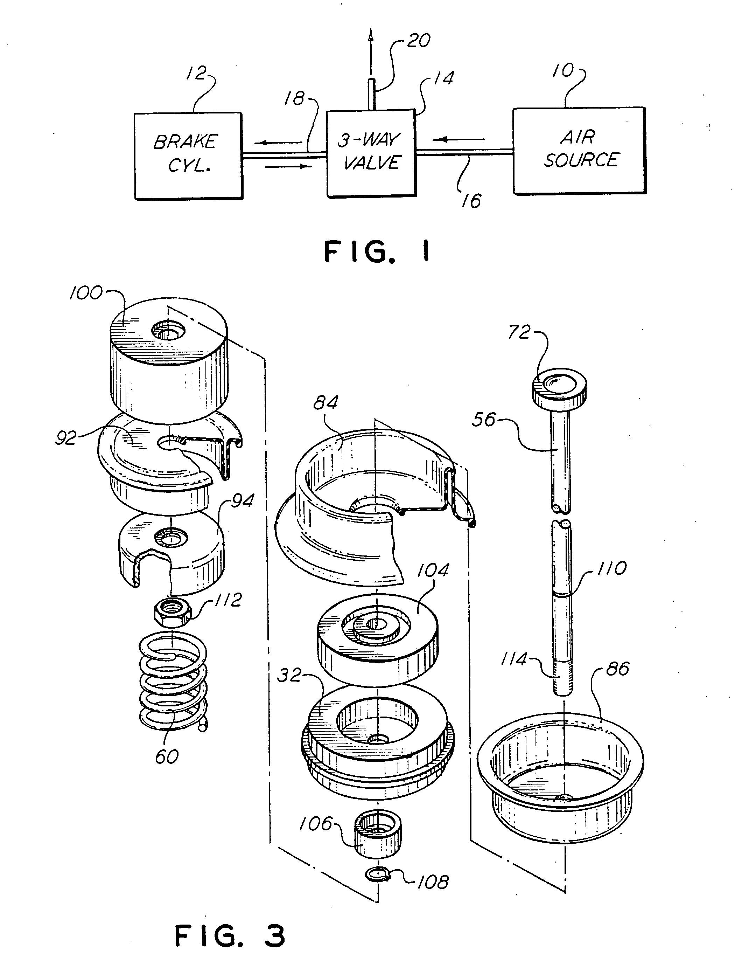

Figure 1 illustrates the major functional components of a typical air brake system often used in railway applications, as commonly understood by those skilled in the art. The system includes an air reservoir 10 in which a supply of compressed air is stored for use as needed. One or more brake cylinders, such as brake cylinder 12, are also provided, each connected to a respective vehicle brake. Each of the brake cylinders functions to apply the respective brake when supplied with pressurized air. Conversely, the brake will be released when air is exhausted from the associated brake cylinder.

A brake valve 14 is provided to control flow of air in the brake system. Fluid communication between reservoir 10 and valve 14 is provided by a suitable conduit 16. Similarly, fluid communication between valve 14 and brake cylinder 12 is provided by a conduit 18. An exhaust pipe, indicated at 20, is also connected to valve 14.

As with many prior art valves, brake valve 14 permits operation in three states: (1) delivery; (2) exhaust; and (3) lap. In the delivery state, air is supplied from reservoir 10, through valve 14, to brake cylinder 12. As a result, the braking force will steadily increase until its maximum level is achieved. In the exhaust state, the vehicle brake is quickly released by exhausting the pressurized air within brake cylinder 12 into the ambient atmosphere through exhaust pipe 20. In the lap state, valve 14 contains the pressurized air already present within brake cylinder 12. As a result, the brake will be neither released nor further applied, but maintained at its current level.

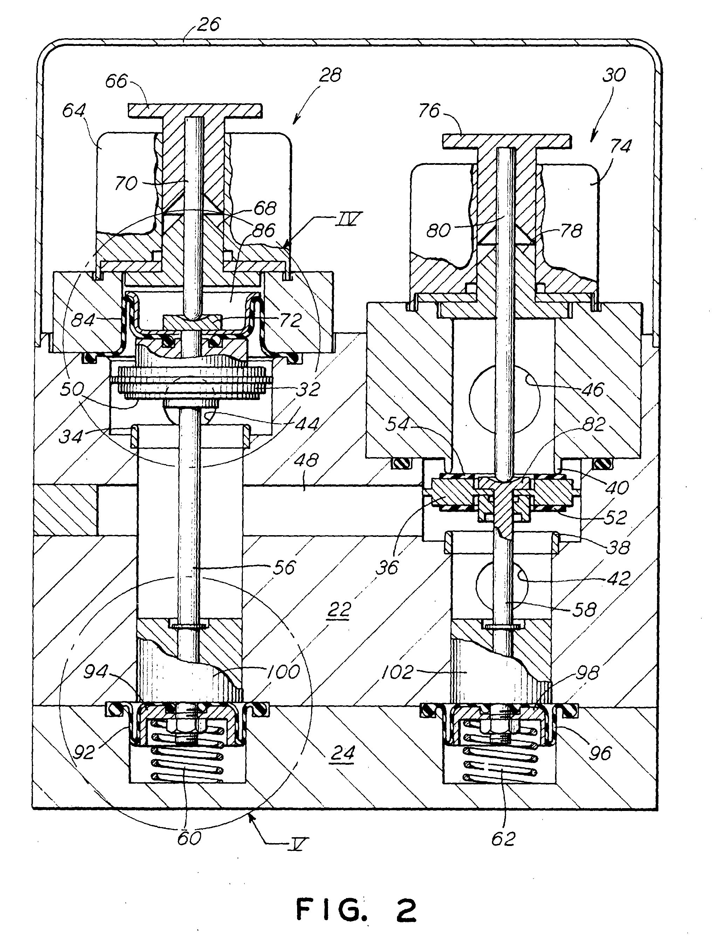

A preferred construction of brake valve 14 may be described with reference to Figure 2. As can be seen, valve 14 includes a housing block 22 defining various fluid ports. A bottom plate 24 is connected to housing block 22 to facilitate assembly of the internal valve components. A cover 26 may also be provided to enclose the upper portion of valve 14 during use.

Valve 14 includes two internal valves, controlled by respective solenoids 28 and 30. For purposes of explanation, the two internal valves will be referred to as the "left valve" and the "right valve" as seen in the view of Figure 2. In this case, the left valve includes a valve element 32 axially movable into and out of engagement with valve seat 34. The right valve includes a valve element 36 axially movable into and out of engagement with opposed valve seats 38 and 40. For reasons that will become apparent from the discussion below, valve seats 38 and 40 preferably have approximately the same diameter, and therefore equivalent effective areas.

Referring again also to Figure 1, housing 14 defines a supply port 42. In use, supply port 42 is connected to conduit 16, thereby establishing fluid communication with reservoir 10. A delivery port 44 is similarly connected to conduit 18 for providing fluid communication with brake cylinder 12. An exhaust port 46 is likewise connected to exhaust pipe 20. Fluid communication between the left and right valves is provided by an interconnecting conduit 48, which may thus itself be considered a port for the respective internal valves.

It will be appreciated that housing 22 defines two fluid flow paths through its interior. The first such flow path extends from supply port 42, along interconnecting conduit 48, to delivery port 44. The second such flow path extends from delivery port 44, back along interconnecting conduit 48, to exhaust port 46. The combination of these flow paths and the configuration of the left and right valves permits the multiple states of fluid transfer described above.

For example, the delivery state is achieved with valve elements 32 and 36 in their respective "at rest" positions, as shown in Figure 2. Pressurized air entering supply port 42 will be conducted along the first fluid flow path directly to delivery port 44. The illustrated design thus causes brake application in the absence of an actuation signal at solenoids 28 and 30, as desired in many applications.

The exhaust state is achieved in the illustrated design by the actuation of solenoid 30. Specifically, actuation of solenoid 30 causes valve element 36 to engage valve seat 38. In so doing, valve element 36 moves from its "at rest" engagement with valve seat 40. As a result, pressurized air within the brake cylinder will be conducted along the second fluid flow path from delivery port 44 to exhaust port 46.

The lap state is achieved by actuation of solenoid 28. Specifically, actuation of solenoid 28 will cause valve element 32 to move from its "at rest" position into engagement with valve seat 34. When valve element 32 is engaged in this manner, pressurized air already present in the brake cylinder will be trapped. As such, the braking force applied by the associated brake will remain substantially constant.

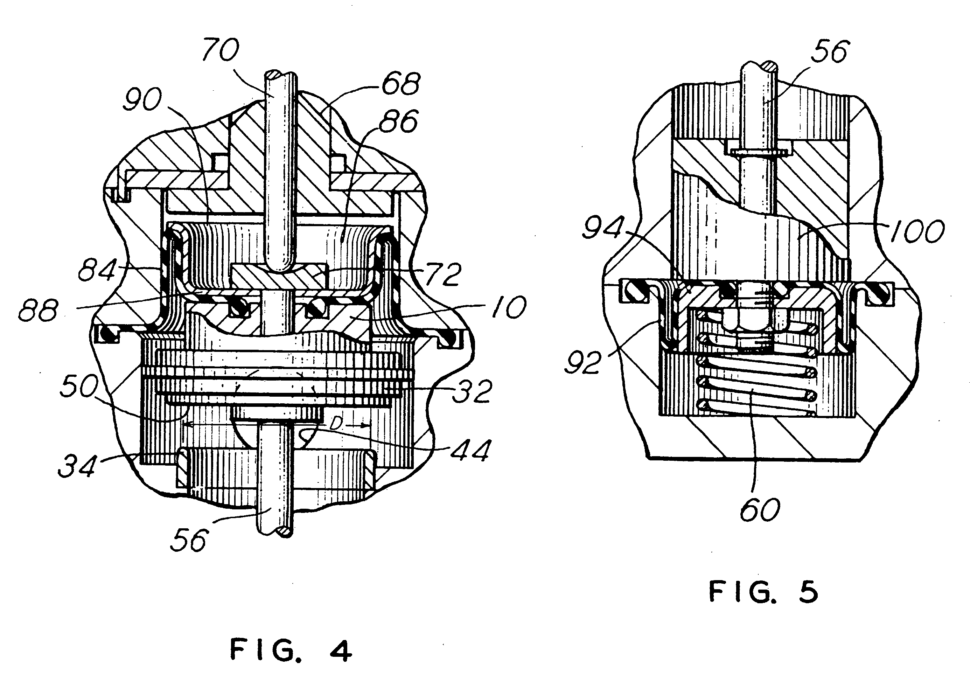

Referring now also to Figures 3 through 5, the construction of the internal valves will be described in detail. Each of the valve elements 32 and 36 are configured in this case as a disc having a elastomeric ring mounted thereon for engaging the associated valve seat and providing an effective seal therewith. Thus, valve element 32 has a single elastomeric ring 50 mounted on its bottom side for engaging valve seat 34. Similarly, valve element 36 has two elastomeric rings 52 and 54 mounted on its respective sides for engaging valve seats 38 and 40.

As can be seen, valve elements 32 and 36 are themselves mounted on respective valve stems 56 and 58. Solenoids 28 and 30 function to move valve stems 56 and 58 axially downward (in the reference frame of Figure 2), whereas springs 60 and 62 urge valve stems 56 and 58 axially upward. In the illustrated embodiment, springs 60 and 62 are chosen such that they provide sufficient spring force to return respective valve elements 32 and 40 to their "at rest" positions when solenoids 28 and 30 are deactivated. Spring 62 should also provide sufficient spring force to ensure an effective seal between elastomeric ring 54 and valve seat 40.

Solenoid 28 includes a stationary coil portion 64, a moveable armature 66 and a stationary pole piece 68. A push pin 70, extending through pole piece 68, is attached to armature 66. As shown, push pin 70 engages a stem head 72 located at one end of valve stem 56. As a result, an electrical current applied to coil portion 64 will cause attraction of armature 66 to pole piece 68, thereby causing push pin 70 to axially move valve stem 56.

Similarly, solenoid 30 includes a stationary coil portion 74, a moveable armature 76 and a stationary pole piece 78. A push pin 80 is provided in this case to engage a stem head 82 located at one end of valve stem 58.

As discussed above, fluid pressure within valve 14 will often greatly exceed the axial force that can be easily produced by a typical solenoid or return spring. In an unbalanced valve design, a significant portion of this fluid force will oppose axial movement of the valve stem. For example, the fluid force may act on the valve element in a direction opposite that which occurs when the solenoid is activated, or opposite the direction of the return spring. The solenoid or spring may be, unless made very large, incapable of producing sufficient axial force to overcome this fluid force.

To cancel the effects of the fluid force, the left and right internal valves of valve 14 each include at least one counterbalance assembly. Preferably, a counterbalance assembly will be provided for each valve inlet supplying greater than atmospheric pressure at some time during its operation. Thus, the left valve will have two (2) counterbalance assemblies, since pressurized air from both the supply port 42 (through interconnecting conduit 48) and delivery port 44 must be balanced. The right valve, on the other hand, may have a single counterbalance assembly to balance pressurized air from the supply port 42. Exhaust port 46 may not require a counterbalance assembly if it exhausts to atmosphere.

In presently preferred embodiments, the counterbalance assemblies function to provide a substantially constant balancing force throughout the reciprocative stroke of the associated valve element. In other words, the counterbalance assembly will provide a certain balancing force not only at the end points of the stroke, i.e., completely closed or completely open, but at axial locations in between. As a result, valve 14 is more easily controlled with less solenoid or spring force than would otherwise be required.

Toward this end, each of the counterbalance assemblies is preferably constructed having a flexible, rolling diaphragm supported by a complementary diaphragm follower. A thin diaphragm is especially preferred because it contributes relatively little friction that the solenoid and spring must overcome. A diaphragm having a thickness of no greater than approximately 0.508-0.762 mm (20-30 mils) is generally useful for this purpose.

As shown in Figure 4, the counterbalance assembly located adjacent stem head 72 includes diaphragm 84 and diaphragm follower 86. Follower 86 is configured having a cup-shaped lower portion 88 integrally extending into an a upper flanged rim portion 90. It can be seen that diaphragm 84 largely conforms to the exterior dimensions of follower 86.

During use, diaphragm 84 will maintain a substantially constant effective area as follower 86 is moved axially with valve stem 56. (The effective area of the diaphragm may be defined as the diameter at the location where it folds back onto itself, in this case directly under rim portion 90 of follower 86.) In order to substantially balance the fluid force imposed on valve element 32 when engaging valve seat 34, this effective area is preferably made to be substantially equal to the effective area of valve seat 34 (which may be determined from its effective diameter D).

Because the effective area of diaphragm 84 will remain substantially constant as it is moved axially with valve stem 56 (due to follower 90), the axial force imposed on diaphragm 84 by the fluid will also remain substantially constant (except to the extent that the fluid pressure itself may vary). In this way, diaphragm 84 will contribute a controlled, upward balancing force during the reciprocative stroke of valve stem 56. This is in contrast to many prior art valve designs in which the effective area of the diaphragm may vary as the valve stem moves. This change in effective area may cause a concomitant change in the force component contributed by the diaphragm. It will be appreciated that such a varying force may lead to undesirable operational states in the valve.

The other counterbalance assemblies of valve 14 function in a similar manner. In this regard, Figure 5 illustrates the lower counterbalance assembly of the left valve, which includes a diaphragm 92 and a follower 94. Due to the configuration of follower 94, the effective area of diaphragm 92 will remain substantially constant during the stroke of valve stem 56. As a result, a controlled, downward balancing force will be contributed as valve element 32 axially moves with valve stem 56. Like the upper counterbalance assembly, the effective area of the lower counterbalance assembly is also preferably made to be approximately equal to that of valve seat 34.

As shown in Figure 2, the single counterbalance assembly of the right valve similarly includes diaphragm 96 and follower 98. Follower 98 ensures that the effective area of diaphragm 96 will remain substantially constant as valve stem 58 is moved. Thus, this counterbalance assembly will also provide a controlled balancing force throughout the reciprocative stroke of valve element 36. In this case, the effective area is preferably made to be approximately equivalent to that of valve seat 38 (and valve seat 40).

The operation of the left and right valves, as aided by the various counterbalance assemblies, will now be described. With valve element 32 and valve element 36 in their respective "at rest" positions, pressurized air will flow from supply port 42 to delivery port 44, as described above. This fluid force will impose a certain axial force on diaphragm 84 in the upward axial direction. However, an equivalent fluid force will also be imposed on diaphragm 92 in the opposite, downward axial direction. As such, diaphragm 84 and diaphragm 92 will function to counterbalance one another, as desired.

The pressurized air from supply port 42 will also impose a downward axial force on diaphragm 96. In addition, an upward axial force will be imposed on valve element 36, as defined by the effective area of valve seat 40. Because the effective area of diaphragm 96 and valve seat 40 are the same, however, the fluid forces will be substantially canceled.

Assume now that valve 14 is to enter the lap state. In this case, valve element 32 will move from its "at rest" position into engagement with valve seat 34, as described above. Because the effective areas of diaphragm 84 and diaphragm 92 remain the same during axial movement of valve stem 56, the fluid forces which would otherwise oppose axial movement of valve stem 56 also remain substantially balanced. This balance will continue throughout substantially the entire stroke through which valve element 32 axially moves.

As valve element 32 engages valve seat 34, a fluid force will be imposed thereon in proportion to a pressure difference between supply port 42 and delivery port 44, as well as the effective area of valve seat 34. Because diaphragm 84 has the same effective area as valve seat 34, diaphragm 84 will oppose the fluid force imposed on valve element 32 by pressurized fluid entering back through delivery port 44. Similarly, diaphragm 92 will balance the force imposed on valve element 32 by fluid entering through supply port 42.

Assume now that valve 14 has entered the exhaust state. In this case, valve element 32 will be in its "at rest" position, where diagrams 84 and 92 will balance each other as described above. In addition, however, valve element 36 will move from its "at rest" position against valve seat 40 into engagement with valve seat 38. As a result, pressurized fluid entering supply port 42 will impose equal and opposite forces on diaphragm 96 and the underside of valve element 36. Again, the fluid force will be substantially balanced, as desired.

Referring again to Figure 2, the illustrated construction further includes a cylindrical guide element 100 mounted to valve stem 56. As shown, guide element 100 has an outer diameter slightly smaller than the inner diameter of the interior bore through which valve stem 56 extends. As a result, guide element 100 functions to transversely stabilize valve stem 56 during its axial movements. A similar guide element 102 is mounted to valve stem 58.

For purposes of further describing the construction of valve 14, reference is now made to Figure 3. Specifically, Figure 3 illustrates the manner in which the various components may be assembled onto valve stem 56 in the illustrated embodiment. While only valve stem 56 is shown in this drawing, it should be appreciated that valve stem 58 may be similarly assembled.

As shown, the first component mounted on valve stem 56 is follower 86. Next, diaphragm 84 is mounted on valve stem 56, followed by a backing disc 104. Valve element 32 and retaining collar 106 are next installed.

Guide element 100 is retained in position by a snap ring 108. Snap ring 108 is itself maintained in a groove 110 defined about valve stem 58 at the appropriate location. After guide element 100 is installed, diaphragm 92 and follower 94 are positioned on valve stem 56. Finally, a retaining nut 112 is secured to a threaded portion 114 at the end of valve stem 56.

It can be seen that the present invention provides a valve assembly which overcomes the various disadvantages of the prior art. Because of the substantial balancing achieved in the valve interior, the axial forces supplied by both the solenoid and the return spring can be very small. In fact, the force of the return spring may be limited to the small amount of diaphragm friction, as well as the force component necessary to achieve firm engagement between the valve element and its associated valve seat. The solenoid should be sized to produce these force components plus sufficient force to overcome the return spring.

It should also be distinctly understood that the teachings of the present invention are not limited to valves having multiple interior valves, but also include various singular valve designs. Thus, while preferred embodiments of the invention have been shown and described, modifications and variations thereto may be practiced by those of ordinary skill in the art without departing from the scope of the present invention, which is more particularly set forth in the appended claims. In addition, various embodiments of the invention may be interchanged both in whole or in part. Furthermore, those of ordinary skill in the art will appreciate that the foregoing description is by way of example only, and is not intended to be limitative of the invention so further described in such appended claims.

## Claims

1. A brake valve assembly comprising:
a valve housing defining a supply port (42), a delivery port (44), an exhaust port (46) and an interconnecting conduit (48);
first and second valve devices having respective solenoids (28, 30) for control thereof, said valve devices being in fluid communication with one another along said interconnecting conduit (48) and having respective valve elements (32,36) axially movable into and out of engagement with associated valve seats (34,38,40);
said valve devices further arranged such that control thereof by selective actuation of said respective solenoids (28,30) will effect multiple states of fluid communication between said supply port (42), said delivery port (44) and said exhaust port (46); and
each of said valve devices being constructed such that said respective valve element (32,36) thereof is directly axially movable upon actuation of said respective solenoid (28, 30) ;
each of said valve devices having at least one counterbalance assembly including a flexible, rolling diaphragm (84,92,96) disposed adjacent to a diaphragm follower (86,94,98) and operatively connected to and in fluid opposition with said respective valve element (32,36) when engaging said associated valve seat (34,38,40) to counterbalance a fluid force imposed thereon through one of said ports (42,44,46), said at least one counterbalance assembly having an effective area substantially equal to an effective area defined by said associated valve seat (34,38,40).

2. A brake valve assembly as set forth in claim 1, wherein said multiple states of fluid communication comprise:
a fluid delivery state wherein a first fluid flow path is defined between said supply port (42) and said delivery port (44);
a fluid exhaust state wherein a second fluid flow path is defined between said delivery port (44) and said exhaust port (46); and
a lap state wherein fluid communication into and out of said delivery port (44) is blocked.

3. A brake valve assembly as set forth in claim 2, wherein said first valve device has a pair of valve seats (38,40) respectively associated with said supply port (42) and said exhaust port (46);

4. A brake valve assembly as set forth in claim 3, wherein said respective valve element of said first valve device has a single valve element (36) reciprocatively movable between said pair of valve seats (38,40).

5. A brake valve assembly as set forth in claim 3, wherein said second valve device has a single valve seat (34) associated with said delivery port (44).

6. A brake valve assembly as in claim 1, wherein said effective area of said counterbalance assembly remains substantially constant throughout a predetermined axial range through which said respective valve element (32,36) operatively moves.

7. A brake valve assembly as set forth in claim 1, wherein said diaphragm follower (86,94,98) has a cylindrical cup portion integrally extending into a flanged rim portion distal from said valve seat (34,38,40).

8. A brake valve assembly as set forth in claim 1, wherein said at least one counterbalance assembly of said first valve device has a single counterbalance assembly and said at least one counterbalance assembly of said second valve device is further **characterized by** a pair of oppositely-directed counterbalance assemblies.

9. A brake valve assembly as set forth in claim 1, wherein said flexible, rolling diaphragm (84,92,96) has a thickness of no greater than approximately 0.76 millimeters.

10. A valve assembly for selectively regulating flow of a fluid medium, said valve assembly comprising:
a valve housing defining a first fluid port (42), a second fluid port (44) and a first fluid flow path (48) therebetween;
a solenoid device connectable to a source of electrical energy, said solenoid device (28,30) including an axially movable armature element (66, 76) ;
a valve stem (56,58) operatively connected to said armature element (66,76) of said solenoid device (28,30) for direct axial movement therewith in at least a first axial direction over a predetermined axial range;
a first valve seat (34,38) located along said first fluid flow path, said first valve seat (34,38) defining a predetermined effective area; and
a valve element (32,36) mounted on said valve stem (56,58) for movement into and out of engagement with said first valve seat (34, 38);
at least one counterbalance assembly including a flexible diaphragm (84,92,96) disposed adjacent to a diaphragm follower (86,94,98) and operatively connected to said valve stem (56,58) to be in fluid opposition to said valve element (32,36) when engaging said valve seat (34,38,40), said counterbalance assembly having an effective area substantially equivalent to said predetermined effective area of said first valve seat (34,38) throughout said predetermined axial range.

11. A valve assembly as set forth in claim 10, wherein said flexible diaphragm (84,92,96) is a rolling diaphragm.

12. A valve assembly as set forth in claim 11, wherein said diaphragm follower (86,94,98) has a cylindrical cup portion integrally extending into a flanged rim portion distal from said valve seat (34,38).

13. A valve assembly as set forth in claim 10, having a spring (60,62) operatively connected to said valve stem (56,58) to bias said valve stem (56,58) in a second axial direction opposite to said first axial direction.

14. A valve assembly as set forth in claim 13, wherein said valve element (32,36) is operative to engage said first valve seat (34,38) when moved in said first axial direction and to disengage said first valve seat (34, 38) when moved in said second axial direction.

15. A valve assembly as set forth in claim 10, wherein said at least one counterbalance assembly has respective first and second counterbalance assemblies operatively connected to said valve stem (56) on opposite sides of said valve element (32).

16. A valve assembly as set forth in claim 15, wherein said first and second counterbalance assemblies each has a flexible diaphragm (84,92,96) disposed adjacent to a diaphragm follower (86,94,98).

17. A valve assembly as set forth in claim 10, further **characterized by**:
said valve housing further defining a third fluid port (46) ;
a second valve seat (40) located along a second fluid flow path between said third fluid port (46) and said second fluid port (44); and
said second valve seat (40) situated in axial opposition to said first valve seat (38) such that said valve element (36) moves reciprocatively therebetween, said predetermined axial range being defined by an axial distance between said first valve seat (38) and said second valve seat (40).

18. A valve assembly as set forth in claim 10, having an annular guide element (100,102) mounted to said valve stem (56,58).

19. A valve assembly as set forth in claim 10, wherein said flexible, rolling diaphragm (84,92,96) has a thickness of no greater than approximately 0.76 millimeters.

## Patentansprüche

1. Bremsventilbaugruppe, die umfasst:
ein Ventilgehäuse, das eine Zuführöffnung (42), eine Speiseöffnung (44), eine Austrittsöffnung (46) und eine Verbindungsleitung (48) aufweist;
eine erste und eine zweite Ventilvorrichtung, die entsprechende Solenoide (28,30) zur Steuerung derselben aufweisen, wobei die Ventilvorrichtungen über die Verbindungsleitung (48) miteinander in Fluidverbindung stehen und entsprechende Ventilelemente (32,36) aufweisen, die axial in und aus Eingriff mit dazugehörigen Ventilsitzen (34,38,40) bewegt werden können;
wobei die Ventilvorrichtungen des Weiteren so ausgeführt sind, dass Steuerung derselben durch wahlweises Betätigen der entsprechenden Solenoide (28,30) mehrfache Zustände der Fluidverbindung zwischen der Zuführöffnung (42), der Speiseöffnung (44) und der Austrittsöffnung (46) herstellt; und
jede der Ventilvorrichtungen so aufgebaut ist, dass das entsprechende Ventilelement (32,36) derselben bei Betätigung des entsprechenden Solenoids (28,30) direkt axial bewegt werden kann;
wobei jede der Ventilvorrichtungen wenigstens eine Ausgleichsbaugruppe aufweist, die eine flexible rollende Membran (84,92,96) enthält, die an ein Membran-Folgeglied (86,94,98) angrenzend angeordnet und funktionell mit dem entsprechenden Ventilelement (32,36) verbunden ist und sich in Fluid-Gegenstrom dazu befindet, wenn es mit dem dazugehörigen Ventilsitz (34,38,40) in Eingriff kommt, um eine über eine der Öffnungen (42,44,46) darauf ausgeübte Fluidkraft auszugleichen, wobei die wenigstens eine Ausgleichsbaugruppe eine wirksame Fläche hat, die im Wesentlichen einer wirksamen Fläche entspricht, die durch den dazugehörigen Ventilsitz (34,38,40) gebildet wird.

2. Bremsventilbaugruppe nach Anspruch 1, wobei die mehrfachen Zustände der Fluidverbindung umfassen:
einen Fluid-Speisezustand, in dem ein erster Fluidstromweg zwischen der Zuführöffnung (42) und der Speiseöffnung (44) gebildet wird;
einen Fluid-Austrittszustand, in dem ein zweiter Fluidstromweg zwischen der Speiseöffnung (44) und der Austrittsöffnung (46) gebildet wird; und
einen Überlappungszustand, in dem Fluidverbindung in die Speiseöffnung (44) hinein und aus ihr heraus unterbrochen ist.

3. Bremsventilbaugruppe nach Anspruch 2, wobei die erste Ventilvorrichtung ein Paar Ventilsitze (38,40) aufweist, die mit der Zuführöffnung (42) bzw. der Austrittsöffnung (46) verbunden sind.

4. Bremsventilbaugruppe nach Anspruch 3, wobei das entsprechende Ventilelement der ersten Ventilvorrichtung ein einzelnes Ventilelement (36) aufweist, das zwischen dem Paar Ventilsitze (38,40) hin und her bewegt werden kann.

5. Bremsventilbaugruppe nach Anspruch 3, wobei die zweite Ventilvorrichtung einen einzelnen Ventilsitz (34) aufweist, der mit der Speiseöffnung (44) verbunden ist.

6. Bremsventilbaugruppe nach Anspruch 1, wobei die wirksame Fläche der Ausgleichsbaugruppe über einen gesamten vorgegebenen axialen Bereich, in dem sich das entsprechende Ventilelement (32,36) in Funktion bewegt, im Wesentlichen konstant bleibt.

7. Bremsventilbaugruppe nach Anspruch 1, wobei das Membran-Folgeglied (86,94,98) einen zylindrischen Schalenabschnitt aufweist, der sich integral in einen Flansch-Randabschnitt vor dem Ventilsitz (34,38,40) erstreckt.

8. Bremsventilbaugruppe nach Anspruch 1, wobei die wenigstens eine Ausgleichsbaugruppe der ersten Ventilvorrichtung eine einzelne Ausgleichsbaugruppe aufweist und die wenigstens eine Ausgleichsbaugruppe der zweiten Ventilvorrichtung des Weiteren durch ein Paar entgegengesetzt gerichteter Ausgleichsbaugruppen **gekennzeichnet** ist.

9. Bremsventilbaugruppe nach Anspruch 1, wobei die flexible rollende Membran (84,92,96) eine Dicke von nicht mehr als ungefähr 0,76 mm hat.

10. Ventilbaugruppe zum wahlweisen Regulieren des Stroms eines Fluidmediums, wobei die Ventilbaugruppe umfasst:
ein Ventilgehäuse, das eine erste Fluidöffnung (42), eine zweite Fluidöffnung (44) und einen ersten Fluidstromweg (48) dazwischen aufweist;
eine Solenoidvorrichtung, die mit einer Quelle elektrischer Energie verbunden werden kann, wobei die Solenoidvorrichtung (28,30) ein axial bewegliches Ankerelement (66,76) enthält;
einen Ventilschaft (56,58), der funktionell mit dem Ankerelement (66,76) der Solenoidvorrichtung (28,30) verbunden ist und sich damit direkt axial in wenigstens einer ersten axialen Richtung in einem vorgegebenen axialen Bereich bewegt;
einen ersten Ventilsitz (34,38), der auf dem ersten Fluidstromweg angeordnet ist, wobei der erste Ventilsitz (34,38) eine vorgegebene wirksame Fläche aufweist; und
ein Ventilelement (32,36), das an dem Ventilschaft (56,58) angebracht ist und sich in und aus Eingriff mit dem ersten Ventilsitz (34,38) bewegt;
wenigstens eine Ausgleichsbaugruppe, die eine flexible Membran (84,92,96) enthält, die an ein Membran-Folgeglied (86,94,98) angrenzend angeordnet und funktionell mit dem Ventilschaft (56,58) verbunden ist, so dass sie sich in Fluid-Gegenstrom zu dem Ventilelement (32,36) befindet, wenn es mit dem Ventilsitz (34,38,40) in Eingriff kommt, wobei die Ausgleichsbaugruppe eine wirksame Fläche hat, die im Wesentlichen über den gesamten vorgegebenen axialen Bereich äquivalent zu der vorgegebenen wirksamen Fläche des ersten Ventilsitzes (34,38) ist.

11. Ventilbaugruppe nach Anspruch 10, wobei die flexible Membran (84,92,96) eine rollende Membran ist.

12. Ventilbaugruppe nach Anspruch 11, wobei das Membran-Folgeglied (86,94,98) einen zylindrischen Schalenabschnitt hat, der sich integral in einen Flansch-Randabschnitt vor dem Ventilsitz (34,38) erstreckt.

13. Ventilbaugruppe nach Anspruch 10, die eine Feder (60,62) aufweist, die funktionell mit dem Ventilschaft (56,58) verbunden ist und den Ventilschaft (56,58) in einer zweiten axialen Richtung entgegengesetzt zu der ersten axialen Richtung spannt.

14. Ventilbaugruppe nach Anspruch 13, wobei das Ventilelement (32,36) mit dem ersten Ventilsitz (34,38) in Eingriff kommt, wenn es in der ersten axialen Richtung bewegt wird, und von dem ersten Ventilsitz (34,38) gelöst wird, wenn es in der zweiten axialen Richtung bewegt wird.

15. Ventilbaugruppe nach Anspruch 10, wobei die wenigstens eine Ausgleichsbaugruppe eine entsprechende erste und zweite Ausgleichsbaugruppe hat, die mit dem Ventilschaft (56) an einander gegenüberliegenden Seiten des Ventilelementes (32) funktionell verbunden ist.

16. Ventilbaugruppe nach Anspruch 15, wobei die erste und die zweite Ausgleichsbaugruppe jeweils eine flexible Membran (84,92,96) aufweisen, die an ein Membran-Folgeglied (86,94,98) angrenzend angeordnet ist.

17. Ventilbaugruppe nach Anspruch 10, des Weiteren **dadurch gekennzeichnet, dass**:
das Ventilgehäuse des Weiteren eine dritte Fluidöffnung (46) aufweist;
sich ein zweiter Ventilsitz (40) auf einem zweiten Fluidstromweg zwischen der dritten Fluidöffnung (46) und der zweiten Fluidöffnung (44) befindet; und
der zweite Ventilsitz (40) dem ersten Ventilsitz (38) axial gegenüber angeordnet ist, so dass sich das Ventilelement (36) dazwischen hin und her bewegt, wobei der vorgegebene axiale Bereich durch einen axialen Abstand zwischen dem ersten Ventilsitz (38) und dem zweiten Ventilsitz (40) bestimmt wird.

18. Ventilbaugruppe nach Anspruch 10, die ein ringförmiges Führungselement (100,102) aufweist, das an dem Ventilschaft (56,58) angebracht ist.

19. Ventilbaugruppe nach Anspruch 10, wobei die flexible rollende Membran (84,92,96) eine Dicke von nicht mehr als ungefähr 0,76 mm hat.

## Revendications

1. Ensemble de soupape de freinage, comprenant :
- un boîtier de soupape définissant un orifice d'entrée (42), un orifice de sortie (44), un orifice d'échappement (46) et un conduit d'interconnexion (48) ;
- un premier et un deuxième dispositif à soupape ayant des solénoïdes respectifs (28, 30) pour leur commande, lesdits dispositifs à soupape étant en communication de fluide l'un avec l'autre le long dudit conduit d'interconnexion (48) et ayant des éléments de soupape respectifs (32, 36) axialement mobiles jusqu'en engagement, et hors d'engagement, avec des sièges de soupape associés (34, 38, 40) ;
- lesdits dispositifs à soupape étant en outre agencés de telle manière que leur commande par actionnement sélectif desdits solénoïdes respectifs (28, 30) va effectuer plusieurs états de communication de fluide entre ledit orifice d'entrée (42), ledit orifice de sortie (44) et ledit orifice d'échappement (46) ;
- chacun desdits dispositifs à soupape étant construit de telle façon que ledit élément de soupape respectif (32, 36) de celui-ci est directement mobile axialement lors de l'actionnement dudit solénoïde respectif (28, 30) ;
- chacun desdits dispositifs à soupape ayant au moins un ensemble d'équilibrage qui inclut un diaphragme flexible à déroulement (84, 92, 96) disposé en position adjacente à un suiveur de diaphragme (86, 94, 98) et fonctionnellement connecté audit élément de soupape respectif (32, 36), tout en étant en opposition de fluide vis-à-vis de celui-ci, lorsqu'il engage ledit siège de soupape associé (34, 38, 40) pour équilibrer la force d'un fluide imposée sur celui-ci via l'un desdits orifices (42, 44, 46), ledit au moins un ensemble d'équilibrage ayant une aire effective sensiblement égale à une aire effective définie par ledit siège de soupape associé (34, 38, 40).

2. Ensemble de soupape de freinage selon la revendication 1, dans lequel lesdits plusieurs états de communication de fluide comprennent :
- un état de fourniture de fluide dans lequel un premier trajet d'écoulement est défini pour le fluide entre ledit orifice d'entrée (42) et ledit orifice de sortie (44) ;
- un état d'échappement de fluide dans lequel un deuxième trajet d'écoulement est défini pour le fluide entre ledit orifice de sortie (44) et ledit orifice d'échappement (46) ; et
- un état intermédiaire dans lequel la communication du fluide vers ledit et en provenance dudit orifice de sortie (44) est bloquée.

3. Ensemble de soupape de freinage selon la revendication 2, dans lequel ledit premier dispositif soupape comprend une paire de sièges de soupape (38, 40) respectivement associés avec ledit orifice d'entrée (42) et avec ledit orifice d'échappement (46).

4. Ensemble de soupape de freinage selon la revendication 3, dans lequel ledit élément de soupape respectif dudit premier dispositif à soupape comprend un élément de soupape unique (36) mobile en va-et-vient entre ladite paire de sièges de soupape (38, 40).

5. Ensemble de soupape de freinage selon la revendication 3, dans lequel ledit deuxième dispositif à soupape comprend un siège de soupape unique (34) associé audit orifice de sortie (44).

6. Ensemble de soupape de freinage selon la revendication 1, dans lequel ladite aire effective dudit ensemble d'équilibrage reste sensiblement constante sur toute une plage axiale prédéterminée dans laquelle ledit élément de soupape respectif (32, 36) se déplace fonctionnellement.

7. Ensemble de soupape de freinage selon la revendication 1, dans lequel ledit suiveur de diaphragme (86, 94, 98) comprend une partie en forme de coupe cylindrique qui s'étend de façon intégrale jusque dans une partie de bordure à bride distante dudit siège de soupape (34, 38, 40).

8. Ensemble de soupape de freinage selon la revendication 1, dans lequel ledit au moins un ensemble d'équilibrage dudit premier dispositif à soupape comprend un ensemble d'équilibrage unique, et ledit au moins un ensemble d'équilibrage dudit deuxième dispositif à soupape est en outre **caractérisé par** une paire d'ensembles d'équilibrage dirigés en sens opposés.

9. Ensemble de soupape de freinage selon la revendication 1, dans lequel ledit diaphragme flexible à déroulement (84, 92, 96) a une épaisseur qui n'est pas supérieure à approximativement 0,76 mm.

10. Ensemble de soupape destiné à réguler sélectivement l'écoulement d'un milieu fluide, ledit ensemble de soupape comprenant :
- un boîtier de soupape définissant un premier orifice (42) pour le fluide, un deuxième orifice (44) pour le fluide, et un premier trajet d'écoulement (48) pour le fluide entre ceux-ci ;
- un dispositif à solénoïde susceptible d'être connecté à une source d'énergie électrique, ledit dispositif à solénoïde comprenant un élément d'armature axialement mobile (66, 76) ;
- une tige de soupape (56, 58) fonctionnellement connectée audit élément d'armature (66, 76) dudit dispositif à solénoïde (28, 30) pour exécuter un mouvement axial direct avec lui dans au moins une première direction axiale sur une plage axiale prédéterminée ;
- un premier siège de soupape (34, 38) situé le long dudit premier trajet d'écoulement pour le fluide, ledit premier siège de soupape (34, 38) définissant une aire effective prédéterminée ;
- un élément de soupape (32, 36) monté sur ladite tige de soupape (56, 58) en vue d'un mouvement jusqu'en engagement, et hors d'engagement avec ledit premier siège de soupape (34, 38) ;
- au moins un ensemble d'équilibrage qui inclut un diaphragme flexible (84, 92, 96) disposé en position adjacente à un suiveur de diaphragme (86, 94, 98) et fonctionnellement connecté à ladite tige de soupape (56, 58) afin de se trouver en opposition de fluide par rapport audit élément de soupape (32, 36) lorsqu'il engage ledit siège de soupape (34, 38, 40), ledit ensemble d'équilibrage ayant une aire effective sensiblement équivalente à ladite aire effective prédéterminée dudit premier siège de soupape (34, 38) sur la totalité de ladite plage axiale prédéterminée.

11. Ensemble de soupape selon l'une selon la revendication 10, dans lequel ledit diaphragme flexible (84, 92, 96) est un diaphragme à déroulement.

12. Ensemble de soupape selon la revendication 11, dans lequel ledit suiveur de diaphragme (86, 94, 98) comprend une partie en forme de coupelle cylindrique, qui s'étend de manière intégrée jusque dans une partie de bordure à bride à distance dudit siège de soupape (34, 38).

13. Ensemble de soupape selon la revendication 10, comprenant un ressort (60, 62) fonctionnellement connecté à ladite tige de soupape (56, 58) pour repousser ladite tige de soupape (56, 58) dans une deuxième direction axiale à l'opposé de ladite première direction axiale.

14. Ensemble de soupape selon la revendication 13, dans lequel ledit élément de soupape (32, 36) est capable de fonctionner pour engager ledit premier siège de soupape (34, 38) lorsqu'on le déplace dans ladite première direction axiale, et pour dégager ledit premier siège de soupape (34, 38) lorsqu'on le déplace dans ladite deuxième direction axiale.

15. Ensemble de soupape selon la revendication 10, dans lequel ledit au moins un ensemble d'équilibrage comprend un premier et un deuxième ensemble d'équilibrage respectifs, fonctionnellement connectés à ladite tige de soupape (56) sur des côtés opposés dudit élément de soupape (32).

16. Ensemble de soupape selon la revendication 15, dans lequel ledit premier et ledit deuxième ensemble d'équilibrage comprennent chacun un diaphragme flexible (84, 92, 96) disposé en position adjacente à un suiveur de diaphragme (86, 94, 98).

17. Ensemble de soupape selon la revendication 10, **caractérisé en outre en ce que** :
- ledit boîtier de soupape définit en outre un troisième orifice à fluide (46) ;
- un deuxième siège de soupape (40) situé le long d'un deuxième trajet d'écoulement pour le fluide entre ledit troisième orifice à fluide (46) et ledit deuxième orifice à fluide (44) ; et
- ledit deuxième siège de soupape (40) est situé en opposition axiale par rapport audit premier siège de soupape (38) de manière que ledit élément de soupape (36) se déplace en va-et-vient entre eux, ladite plage axiale prédéterminée étant définie par une distance axiale entre ledit premier siège de soupape (38) et ledit deuxième siège de soupape (40).

18. Ensemble de soupape selon la revendication 10, comprenant un élément guide annulaire (100, 102) monté sur ladite tige de soupape (56, 58).

19. Ensemble de soupape selon la revendication 10, dans lequel ledit diaphragme flexible à déroulement (84, 92, 96) a une épaisseur qui ne dépasse pas approximativement 0,76 mm.
